# EUROPEAN PATENT SPECIFICATION

(11) **EP 3 584 697 B1**
(45) Date of publication and mention of the grant of the patent: **28.06.2023**
(21) Application number: 18754568.6
(22) Date of filing: 24.01.2018
(51) Int. Cl.: G06F 8/65, G06F 8/654, G06F 9/448

(54) **INFORMATION PROCESSING DEVICE**
INFORMATIONSVERARBEITUNGSVORRICHTUNG
DISPOSITIF DE TRAITEMENT D'INFORMATIONS

(30) Priority: 17.02.2017 JP 2017027513
(43) Date of publication of application: 25.12.2019
(73) Proprietor: Hitachi Astemo, Ltd., Hitachinaka-shi, Ibaraki 312-8503 (JP)
(72) Inventor: EBINA, Tomohito, Hitachinaka-shi Ibaraki 312-8503 (JP)
(74) Representative: Mewburn Ellis LLP
(86) International application number: PCT/JP2018/002074
(87) International publication number: WO 2018/150820

(56) References cited:
- WO-A1-00/07106
- JP-A- H1 063 497
- JP-A- H04 363 721
- JP-A- H11 265 283
- JP-A- 2004 341 667
- JP-A- 2006 119 727
- JP-A- 2007 058 840
- JP-A- 2008 225 763
- JP-A- 2010 198 307
- JP-A- 2016 062 311
- JP-A- 2016 170 471
- US-A- 5 938 766
- US-B1- 7 657 886
- US-B1- 7 886 287

## Description

### Technical Field

The present invention relates to a technology for updating a program of an information processing device which is used in control of a vehicle.

### Background Art

A vehicle control system is configured by an electronic vehicle control device and an electronic control device which controls the vehicle control device (that is, an ECU (Electronic Control Unit)). The ECU and the vehicle control device are linked through communication, and control the vehicle. In recent years, a complex control such as an automatic drive of the vehicle is required for the vehicle control system. Therefore, the ECU is configured such that a software program is performed by a processor. Then, the program of the ECU is becoming complex and sophisticated.

In addition, as the program of the ECU is required to be rewritten at a high frequency, the OTA (Over The Air) technique receives attention as a method of rewriting the program of the ECU of the vehicle at a user's house without bringing the vehicle to a maintenance factory. Besides the ECU, the OTA is also used in rewriting the program of a mobile phone.

The mobile phone becomes unable to make a call during rewriting the program. On the other hand, the ECU becomes unable to control the vehicle during rewriting the program. Therefore, the rewriting of the program of the ECU is desirably completed as quickly as possible.

WO 2015/083234 A1 discloses a technique of reducing a time required for updating the program. According to the technique of WO 2015/083234 A1, a time of updating a program can be reduced by writing only a function to be added when the program using the function is updated.

US 7 886 287 B1 refers to a method and apparatus for hot updating of running process. US 5 938 766 A discloses a system for extending functionality of a digital ROM using RAM/ROM jump tables and a patch manager for updating the tables.

### Summary of Invention

### Technical Problem

However, WO 2015/083234 A1 considers only that a function of calling an existing function is newly added, but fails in reducing a time for updating the program in a case where the existing function is updated.

An object of the invention is to provide a technology for reducing a time when the information processing device cannot execute control due to a program update accompanying with a function change.

### Solution to Problem

The invention is defined in claim 1. The dependent claims describe preferred embodiments of the invention. An information processing device includes a storage unit and a processing unit, wherein the storage unit stores a program which contains a function and a jump table which defines calling of the function by the program, and wherein the processing unit is configured to determine the function to be called with reference to the jump table when the program is executed and, when the program is updated accompanying with a change of the function, write a new function which is a function after the change and update the jump table to call the new function.

### Advantageous Effects of Invention

In a program update of an information processing device, a jump table is updated to call a new function after writing the new function while leaving a function before updating, so that it is possible to reduce a time when control is not executable due to the program update.

### Brief Description of Drawings

[FIG. 1] FIG. 1 is a conceptual diagram illustrating a vehicle according to a first embodiment.
[FIG. 2] FIG. 2 is a block diagram illustrating a hardware configuration of a vehicle control device according to the first embodiment.
[FIG. 3] FIG. 3 is a diagram illustrating a configuration in a memory of the vehicle control device according to the first embodiment.
[FIG. 4] FIG. 4 is a diagram for describing updating of a function in the first embodiment.
[FIG. 5] FIG. 5 is a diagram for describing switching of a function jump table in the first embodiment.
[FIG. 6] FIG. 6 is a diagram for describing selecting of the function jump table by a jump table selection unit in the first embodiment.
[FIG. 7] FIG. 7 is a state transition diagram illustrating a change in table state in the first embodiment.
[FIG. 8] FIG. 8 is a flowchart illustrating a jump table selecting process in the first embodiment.
[FIG. 9] FIG. 9 is a diagram illustrating a layout in the memory of the function jump tables and functions in the first embodiment.
[FIG. 10] FIG. 10 is a diagram illustrating an example of a layout of functions in a memory 11 in a second embodiment.
[FIG. 11] FIG. 11 is a diagram for describing updating of a function in a third embodiment.

### Description of Embodiments

Hereinafter, embodiments will be described using the drawings.

### First Embodiment

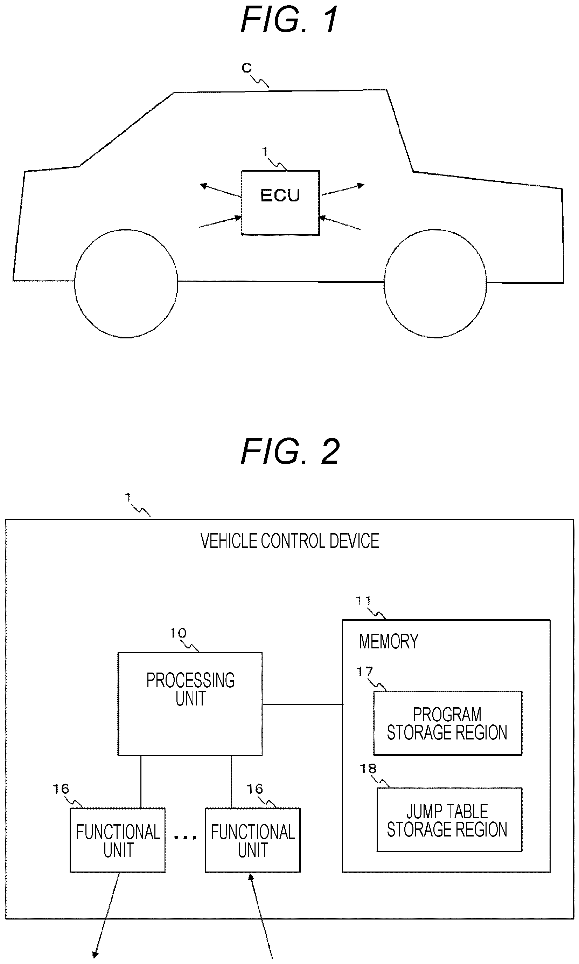

FIG. 1 is a conceptual diagram illustrating a vehicle according to a first embodiment. In the vehicle C of the first embodiment, a vehicle control device 1 is assembled. The vehicle control device 1 is an ECU (electronic control unit) which collects input information from each part of the vehicle C, generates a control signal to control each part of the vehicle C on the basis of the input information, and transmits the signal to each part.

FIG. 2 is a block diagram illustrating a hardware configuration of the vehicle control device according to the first embodiment. The vehicle control device 1 includes a processing unit 10, a memory 11, and a functional unit 16.

The memory 11 is a storage device which stores programs and data, and includes a program storage region 17 which stores software programs and a jump table storage region 18 which stores a jump table. A program is configured by a plurality of functions. A jump table is information defining a call of a function by a program. With reference to the jump table, it is possible to obtain information to call a desired function.

The processing unit 10 includes a processor (not illustrated), and controls each part of the vehicle C by executing the software program. The processing unit 10 determines a function to be called with reference to the jump table when the program is executed. In addition, in a case where a program update accompanying with a change of the function is performed, the processing unit 10 writes a new function, which is a function after the changing, in the program storage region 17 of the memory 11, and the jump table is updated to call the new function. According to this embodiment, the jump table is updated so as to call the new function after the vehicle control device 1 writes the new function in the program update while writing a function to the memory 11 may take a long time. Therefore, it is possible to reduce a time when the control is not possible due to the program update.

In addition, in this embodiment, the program storage region 17 to store a program and the jump table storage region 18 to store a jump table are separated. Therefore, it is possible to reduce a defect that a function jump table is not able to be updated due to memory shortage even though the writing of the function is successful.

The functional unit 16 serves as an interface to a corresponding part of the vehicle C, and acquires the input information or transmits the control signal.

As described above, the processor executes the program to operate the vehicle control device 1. Herein, in a case where the program executed by the processor is called, an address of a called function is included in a command string to call the function. Therefore, there is a need to confirm the address of the called function.

A compact size, a light weight, and a low cost are required for the ECU. Therefore, in the ECU, the function is often disposed at continuous addresses without an interval in order to save the memory capacity. In a case where some function is corrected and the function size is changed, the address at which another function without correction is disposed is changed.

In the ECU, if a function is corrected, the command string of all the functions is changed generally, and all the memory is necessarily rewritten.

With this regard, the vehicle control device 1 of this embodiment can correct the function without changing the command string of the function of the call source. Incidentally, such a function may be called as a subroutine or procedure.

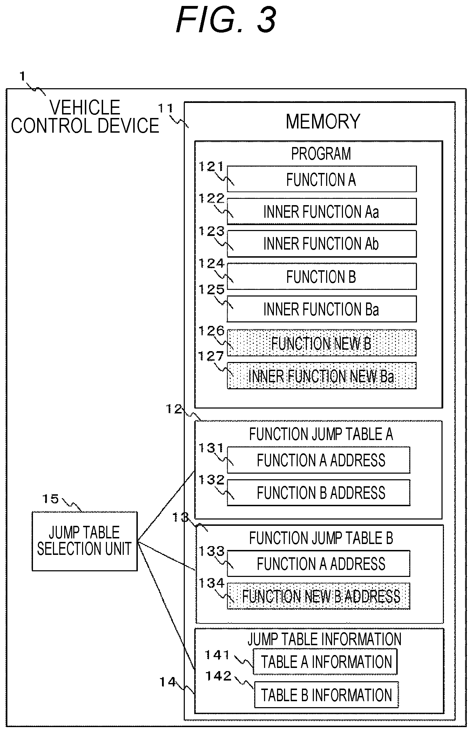

FIG. 3 is a diagram illustrating a configuration in a memory of the vehicle control device according to the first embodiment. A jump table selection unit 15 is realized when the processing unit 10 executes a program. The program disposed in the memory 11 of the vehicle control device 1 includes a plurality of functions A121 and B124 which can be called from other functions, and further includes an inner function Aa122 and an inner function Ab123 which are called from the function A121 and an inner function Ba125 which is called only from the function B124. In this embodiment, when a function (for example, the function A) calls the other function (for example, the function B), the function A does not directly call the function B, but the jump table selection unit 15 selects the function B to be called. The jump table is provided for the jump table selection unit 15 to select the function B.

The jump table includes a function jump table A12 and a function jump table B13 to designate an address of a function to be called, and jump table information 14 indicating the function jump table to be used. The jump table selection unit 15 realized by the processing unit 10 writes a second function jump table (the function jump table B13) designating the address of the new function in the jump table storage region while leaving a first function jump table (the function jump table A12) designating the function before change, and updates the jump table information 14 to change the function jump table to be used from the function jump table A12 to the function jump table B13. After creating the new function jump table B13, the jump table information 14 is updated to use the function jump table B13. Therefore, it is possible to reduce a time when the control is not executable along with the program update.

When a function calls another function, first, the jump table selection unit 15 is used to select any function jump table, and then the function is called from the address indicated in the selected function jump table. For example, when the function A121 calls the function B124, the function A121 first uses the jump table selection unit 15 to select the function jump table A12 or the function jump table B13, and then uses the address indicated in the selected function jump table to call a function B address 132 or a function New B address 134.

The description will be given about a case where the function B124 is changed to the function B126 which is a new function in place of the function B124, and a function New B126 calls an inner function New Ba.

First, the function New B126 and an inner function New Ba127 are written in the memory 11 in advance. In addition, the function jump table B13 containing the function New B address 134 indicating the addresses of the function New B126 and the inner function New Ba127 is written in the memory 11. Further, table B information 142 which is the jump table information related to the function jump table B13 is written in the memory 11.

In this state, the jump table selection unit 15 checks table A information 141 and the table B information 142 which are the jump table information, and determines which one is valid. The jump table information indicates whether each function jump table is valid or invalid. If the function jump table B13 and the table B information 142 are correctly written and become valid, the jump table selection unit 15 selects the function jump table B13. Therefore, the function A121 calls a function New B126 with reference to the function jump table B13.

In this way, in this embodiment, the jump table information 14 indicates whether the function jump tables 12 and 13 are normally written and become valid for each of the function jump tables 12 and 13. The jump table selection unit 15 selects a function jump table to be used from among the valid function jump tables. The validness of each function jump table (that is, whether the function jump table is good for use) is managed by the function jump table information. Therefore, when the function jump table to be used is selected, it is possible to easily determine the function jump table to be used, and a time when the control is not executable can be reduced. In addition, the jump table information is information with which a latest function jump table can be determined. When changing the function jump table to be used from the function jump table A12 to the function jump table B13, the processing unit 10 updates the latest state of the function jump table A12 to the latest state of the function jump table B13. Since the jump table selection unit 15 can easily select the function jump table to be used depending on the latest function jump table, a time when the control is not executable can be set only to a time when the jump table information is updated.

As a specific example, the jump table information includes a created date of each function jump table, and the jump table selection unit 15 may determine the latest function jump table on the basis of the created date.

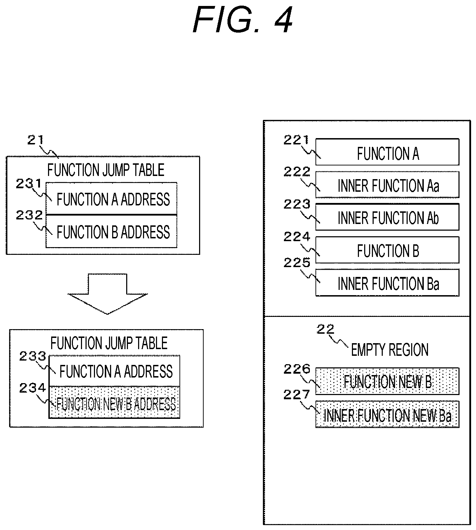

FIG. 4 is a diagram for describing updating of the function in the first embodiment.

A method of using the function jump table will be described.

An address of the function to be called from the other function is registered in the function jump table. On the other hand, the inner function which is not called from the other function but only called from a certain function is not registered in the function jump table. With this configuration, the size of the function jump table can be reduced. For example, an inner function Aa222 which is not called from the other function but only called from the function A221 is not registered in a function jump table 21.

As a format of the function jump table 21, there may be a format of storing a combination of a jump command to the function and the jump destination address, or a format of storing only the jump destination address.

The updating of the function will be described.

In a case where an old version of function is updated to a new version of function as an alternative, the new version of function is written in an empty region 22 of the memory. In the function jump table, the address to jump to the old version of function is updated to the address to jump to the new version of function. For example, in a case where the function B224 is updated to a new version of function New B226, the new version of function New B226 is written to the empty region 22 of the memory, and the content of a function B address 232 to jump to the function B224 is updated to a function New B address 234 to jump to the function New B226 in the function jump table 21.

With this configuration, in a case where the function A221 is to call the function B224, the call command of the function A221 is not corrected, but the function New B226 after updating can be called.

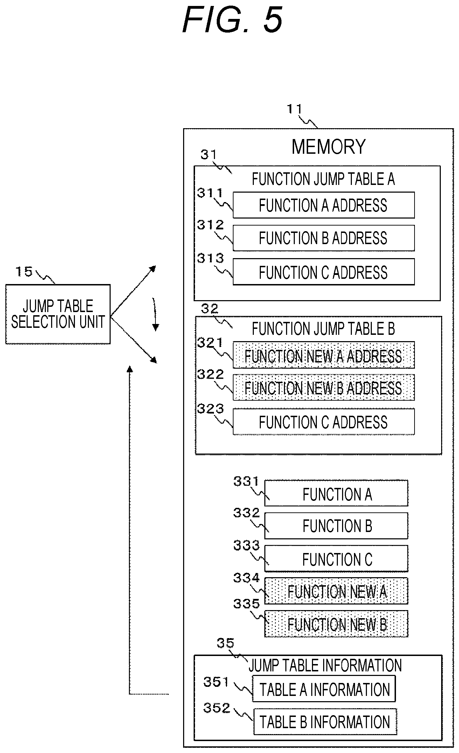

FIG. 5 is a diagram for describing switching of a function jump table in the first embodiment.

In order to keep the matching of the control operation as a whole in the vehicle control device 1, there may be a need to update the plurality of functions at the same timing. Therefore, in this embodiment, the function jump table holding the address of the old function and the function jump table holding the address of the new function are kept together, and the jump table selection unit 15 refers to the jump table information to select the function jump table to be used, so that the functions are switched in a short time.

For example, in a case where there is a need to update the function A331 and the function B332 at the same timing, the function jump table A31 holding the address of the old function and the function jump table B32 holding the address of the new function are held, and the jump table selection unit 15 refers to jump table information 35 to select the function jump table to be used.

In the example of FIG. 5, a function jump table A31 holds the addresses of the function A331, the function B332, and a function C333, and a function jump table B32 holds the addresses of a function New A334, a function New B335, and the function C333. If the function jump table to be used is switched from the function jump table A31 to the function jump table B32, the function A and the function B are updated.

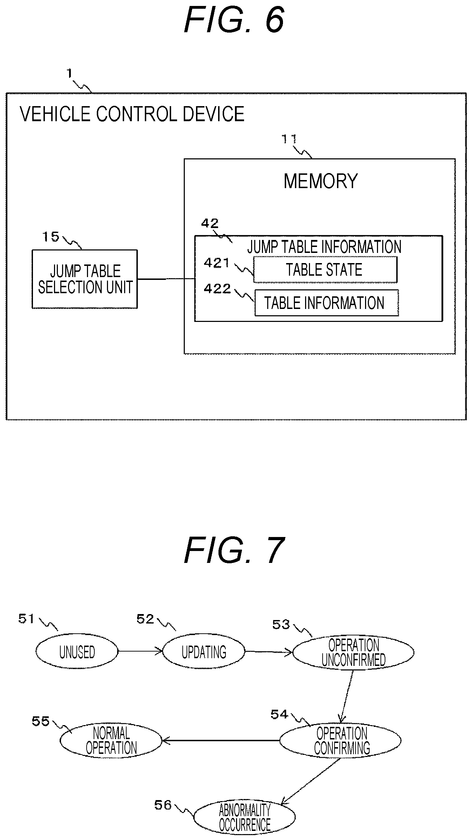

FIG. 6 is a diagram for describing selecting of the function jump table by the jump table selection unit in the first embodiment.

Herein, a table state 421 and table information 422 are contained in jump table information 42 as information related to each function jump table.

As states of the function jump table managed in the table state 421, there are states such as "normal operation," "updating," "operation unconfirmed," "operation confirming," and "abnormality occurrence."

The table information 422 includes an update date and time, the number of times of updating, or the number of times of operations as information related to the function jump table.

The jump table selection unit 15 refers to the table state 421 and the table information 422 to select the function jump table to be used.

FIG. 7 is a state transition diagram illustrating a change in table state in the first embodiment.

During a period when the writing to the memory 11 of the function starts and the writing is going on, the state is shifted from an unused state 51 indicating that the function jump table is not used to an updating state 52. If the writing to the memory 11 of the function is completed, the state becomes the state of an operation unconfirmed 53. At this time, the number of times of the operations of the table information 422 is zero.

The state of the operation unconfirmed 53 is a state in which the writing to the memory 11 of the function is completed but the number of times of the operations is not yet even one. If the state becomes the state of the operation unconfirmed 53, the jump table selection unit 15 selects the function jump table. Thereafter, the state of the function jump table becomes an operation confirming 54 at the timing when the vehicle control device 1 is energized for the first time.

At the timing when the vehicle control device 1 is energized from the state of the operation unconfirmed 53 or the operation confirming 54, the number of times of the operations of the function jump table is added by one. If the number of times of the operations exceeds a predetermined number of times, the state of the function jump table becomes a normal operation 55. On the other hand, in a case where an abnormality occurs from the vehicle control device 1 in the state of the operation confirming 54, the state of the function jump table becomes an abnormality occurrence 56. The function jump table in the state of the abnormality occurrence 56 is not selected by the jump table selection unit 15.

As described above, in this embodiment, if a predetermined defect occurs within a certain time after the jump table is updated to call a new function, the jump table selection unit 15 returns the jump table to the state before updating to call the function before change. In a case where an initial defect occurs due to the change of the function, the state returns to the original state quickly to keep the normal control as much as possible.

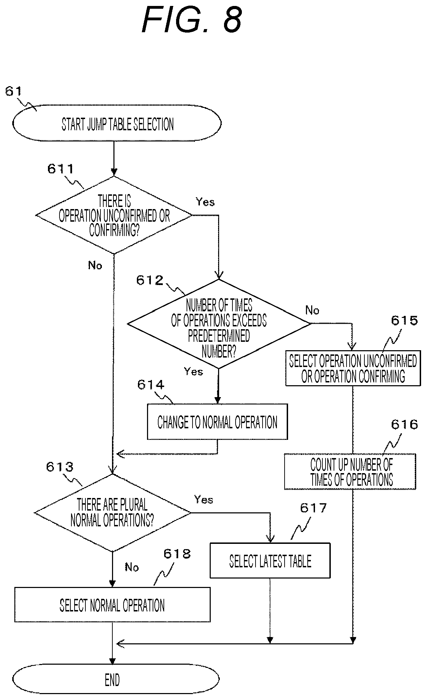

FIG. 8 is a flowchart illustrating a jump table selecting process in the first embodiment.

A jump table selecting process 61 is performed by the jump table selection unit 15. The jump table selecting process 61 will be described below.

Step 611: first, it is determined whether there is a table of the operation unconfirmed 53. If Yes, the process proceeds to Step 612. If No, the process proceeds to Step 613. Step 612: it is determined whether the number of times of the operations exceeds to a predetermined number of times of the operations. If Yes, the process proceeds to Step 614. If No, the process proceeds to Step 615.

Step 613: it is determined whether there are plural function jump tables in which the table state 421 is the normal operation. If Yes, the process proceeds to Step 617. If No, the process proceeds to Step 618.

Step 614: the table state 421 is changed to the normal operation 55, and the process proceeds to Step 613. Step 615: the function jump table of the operation unconfirmed 53 or the operation confirming 54 is selected, and the process proceeds to Step 616.

Step 616: the number of times of the operations of the table information 422 is added by one, and the process is ended.

Step 617: a latest one among the plural function jump tables of the normal operation is selected, and the process is ended. The latest function jump table can be determined by referring to the update date and time of the table information 422.

Step 618: the function jump table of the normal operation is selected, and the process is ended.

Herein, an example of the operation of the jump table selection unit 15 has been described, but the invention is not limited thereto. The operation of the jump table selection unit 15 may differ depending on a condition required of the application of the vehicle control device 1.

Many of the non-volatile memories used in the ECU are not possible to be rewritten in a unit of individual data in the memory, but can be initialized or erased in a unit of memory block. Therefore, there is a need of a process of initializing or erasing in a unit of memory block, rewriting unchanged portions with the same data, and writing a changed portion with new data even in a case where a part of the memory is changed. The size of block depends on the design of a microcomputer. A time required for rewriting a memory block is proportional to the size of the memory block.

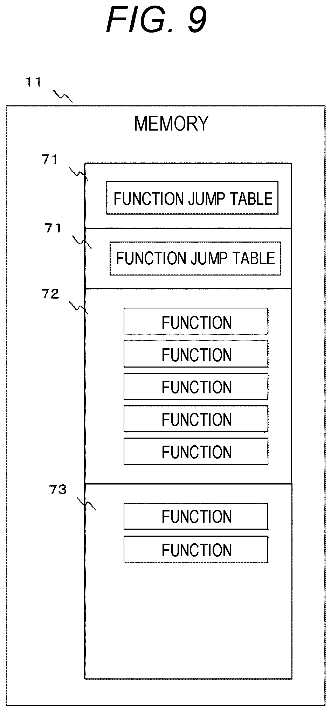

FIG. 9 is a diagram illustrating a layout in the memory of the function jump tables and functions in the first embodiment.

In this embodiment, the memory is effectively used in the ECU mounted in an automobile. Therefore, plural memory blocks having different sizes are configured in the storage region of the memory 11, and the programs and the data are disposed in the memory blocks with sizes suitable thereto. Specifically, there are defined two types of memory blocks having different sizes in the memory 11. Herein, the memory block having a larger size is called a large-capacity block, and the memory block having a smaller size is called a small-capacity block. In this embodiment, the program storage region is defined as the large-capacity block, and the jump table storage region is defined as the small-capacity block. As a result, the function jump table is disposed in the small-capacity block, and the function is disposed in the large-capacity block. Since the program containing the function and the jump table are stored in blocks suitable to respective data amounts, the blocks containing the large-capacity block and the small-capacity block can be used efficiently. In the example of FIG. 9, the function jump table is disposed in a memory block 71 (small-capacity block), and the functions are disposed in memory blocks 72 and 73 (large-capacity block). The memory block 72 has no unused portion, and the memory block 73 has an unused portion.

In a case where the corrected function is written in the memory 11, the function is written in the unused portion of the memory block 73. Further, during the writing of the function, the memory 11 is usable. Therefore, for example, the ECU mounted in an automobile can operate. Even during a period when the automobile is used, the writing of the function to the memory 11 is possible. Therefore, the writing can be performed without restricting the use of the automobile even in a case where a large number of functions are written in the memory 11. On the other hand, as described above, the function jump table is disposed in the small-capacity block. A time for rewriting the function jump table disposed in the memory block 71 (small-capacity block) is shorter than that for writing to the memory block 72 (large-capacity block). Therefore, it is possible to lower a possibility of occurrence of an abnormality due to unexpected power failure.

An appropriate timing for updating the jump table will be described.

The vehicle control device 1 of this embodiment is a vehicle control device which is mounted in a vehicle such as an automobile and controls the vehicle. Therefore, the processing unit 10 may update the jump table when the vehicle control device 1 is energized for example. Since the updating of the jump table is ended at the timing of energization and also in a short time as described above, the program update can be performed with less influence on the traveling of the vehicle similarly to a situation when the vehicle is not traveling.

Alternatively, the processing unit 10 may update the jump table when the engine of the vehicle is stopped. Since the updating of the jump table is ended at the timing when the engine is stopped and also in a short time as described above, the program update can be performed not to influence on the traveling of the vehicle.

### Second Embodiment

In the first embodiment, a new function is sequentially added and written to the empty region of the program storage region of the memory when the function is changed. If this method is kept on, the empty region of the program storage region is gradually reduced, and the function will not be able to be corrected eventually. However, if the updating of the function is repeatedly performed, the old version of function comes to be in an unused state, and uselessly occupies the storage region of the memory.

Therefore, in a second embodiment, the description will be given about an example of an empty blocking process in which an empty memory block is generated by copying only the using function to the other memory block in a case where the function which is no longer in use due to the function correction and the using function are mixed. In the empty blocking process, the processing unit 10 copies only the function to be used using the memory block as a copying source and the other memory block as a copying destination in a state where the function to be used and the unused function are mixed in the same memory block, and sets the memory block of the copying source to an empty state. Since the memory block where the function to be used exists can be set to an empty block, the storage region of the memory can be used efficiently. For example, if the remaining capacity of the memory block used for storing a new function becomes equal to or less than a predetermined value, the empty blocking process of the memory block may be performed.

The vehicle control device according to the second embodiment is basically similar to that of the first embodiment except the following points. Hereinafter, differences of the second embodiment from the first embodiment will be mainly described.

In the vehicle control device 1 of the second embodiment, the data on the memory 11 is not erasable unless the memory 11 is erased in a memory block unit. Therefore, the data in the memory block where even one function to be used exists is not erasable, and the storage region of the memory 11 is not possible to be empty.

As described in the first embodiment, in a state where the function jump table before updating and the function jump table after updating coexist when the function is updated, the process of switching the function jump table to be used from the one before updating to the one after updating. In addition, if an abnormality occurs immediately after the function after updating starts to be used, a process of returning to the function before updating is performed. These processes can be realized if there are two versions (before updating and after updating) of functions. The function of a version older than one before updating is no longer in use. If two types of versions of the function jump tables corresponding to the functions before updating and after updating exist on the memory 11, the function of the older version never becomes a jump destination.

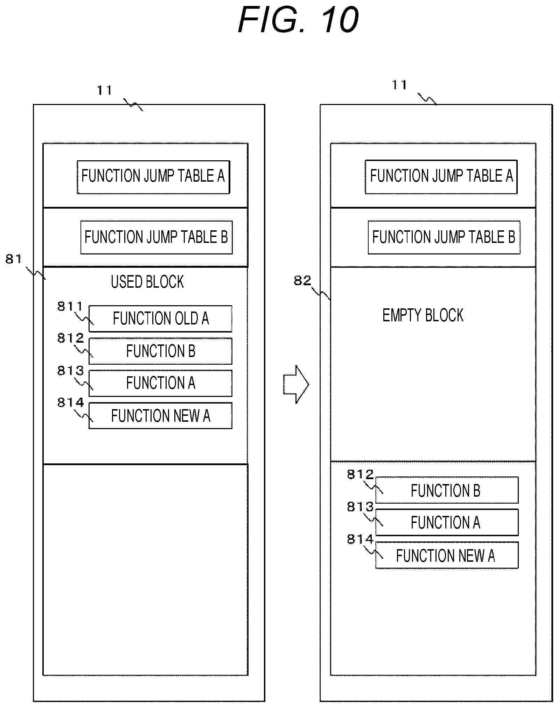

FIG. 10 is a diagram illustrating an example of the layout of the functions in the memory 11 in the second embodiment. In FIG. 10, a function Old A811, a function A813, and a function New A814 are a series of functions sequentially updated. When viewing the memory 11 before the empty blocking process illustrated on the left side of FIG. 10, there are three versions of the function Old A811, the function A813, and the function New A814 with respect to the function A stored in a memory block 81. The function Old A811 is left in the memory without being used. Even though the memory block containing the unused function Old A811 should be erased to be an empty block, the memory block is not possible to be erased because there is the unchanged function B812.

Therefore, in this embodiment, the processing unit 10 copies the function B812, the function A813, and the function New A814 to the other memory block except the unused function Old A811, and rewrites the function jump table to select a new memory block. With this configuration, there is no using function in the memory block 81. Therefore, the processing unit 10 erases the data in the memory block 81 as illustrated in the memory 11 after the empty blocking process on the right side of FIG. 10, and generates an empty block 82. In a case where the function is updated thereafter, a new function can be recorded in the empty block 82.

### Third Embodiment

In the first embodiment, as illustrated in FIG. 4, when the function is corrected, a new function after updating is written in the memory 11 in a state where the function before updating is left on the memory 11, and the function jump tables before and after updating coexist. Then, the function jump table selected by the jump table selection unit 15 is switched from the function jump table before updating to the function jump table after updating. In a third embodiment, the description will be given about an example in which an empty memory block is easily generated by partially changing the process of the first embodiment.

The vehicle control device 1 according to the third embodiment is basically similar to that of the first embodiment except the following points.

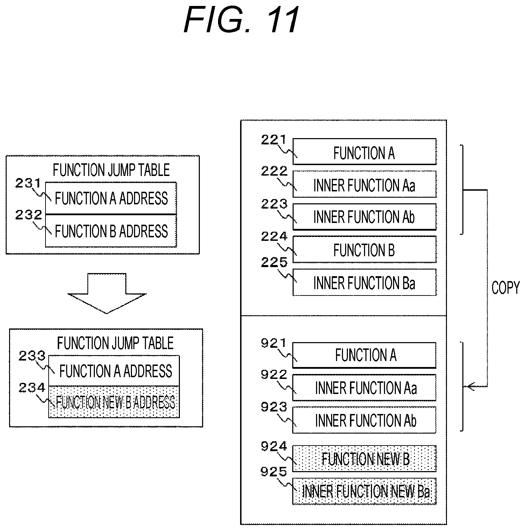

FIG. 11 is a diagram for describing updating of the function in the third embodiment. Hereinafter, differences of the third embodiment from the first embodiment will be mainly described.

In the vehicle control device 1 of the third embodiment, the data on the memory 11 is not erasable unless the memory 11 is erased in a memory block unit similarly to the second embodiment. Since the data in the memory block where even one function to be used exists is not erasable, the function to be used is not left in the memory block when the function is updated in the third embodiment.

In a case where the function B224 and an inner function Ba225 are corrected, first, the processing unit 10 copies the function A221, the inner function Aa222, and an inner function Ab223 which are not to be corrected to the memory block, and creates the function A921, the inner function Aa922, and an inner function Ab923. Further, the processing unit 10 writes a function New B924 and an inner function New B 925 in a new memory block after updating the function B224 and the inner function Ba225. Then, the function jump table is switched to select the function A921 and the function New B924 of the new memory block.

As described above, according to this embodiment, the memory 11 includes the plural memory blocks. The processing unit 10 copies the function which is not changed in the program update to a memory block different from the memory where the function to be changed is stored, and writes the new function of the function to be changed to the memory block where the function which is not changed is copied. In the program update, the function used is not left in the memory block where the function before updating has been stored, so that an empty memory block can be made.

### Reference Signs List

- 1: vehicle control device
- 10: processing unit
- 11: memory
- 15: jump table selection unit
- 16: functional unit
- 17: program storage region

## Claims

1. An information processing device, comprising:
a storage unit (11); and
a processing unit (10),
wherein the storage unit (11) stores a program which contains a function and a jump table which defines calling of the function by the program, and
wherein the processing unit (10) is configured to
determine the function to be called with reference to the jump table when the program is executed, and
when the program is updated accompanying with a change of the function,
write a new function which is a function after the change and update the jump table to call the new function,
wherein the storage unit (11) includes
a program storage region (17) which stores the program, and
a jump table storage region (18) which stores the jump table, and
wherein the processing unit (10) is configured to,
when the program is updated accompanying with a change of the function,
write the new function to the program storage region (17), and
update the jump table of the jump table storage region (18) to call the new function,
wherein the jump table includes a function jump table (12, 13) which designates an address of a function to be called,
wherein the jump table includes jump table information (14) which indicates a function jump table (12, 13) to be used,
wherein the processing unit (10) is configured to,
when the jump table is updated,
write a second function jump table (13) designating an address of the new function to the jump table storage region (18) while leaving a first function jump table (12) designating an address of the function before the change, and
update the jump table information (14) to change the function jump table (12, 13) to be used from the first function jump table (12) to the second function jump table (13) .

2. The information processing device according to claim 1,
wherein the jump table information (14) indicates whether each function jump table (12, 13) is correctly written and valid, and
wherein the processing unit (10) selects the function jump table (12, 13) to be used from the function jump tables (12, 13) which are determined as valid.

3. The information processing device according to claim 1,
wherein the jump table information (14) is information with which a latest function jump table (12, 13) can be determined, and
wherein the processing unit (10) updates a latest state of the first function jump table (12) to a latest state of the second function jump table (13) when the function jump table (12, 13) to be used is changed from the first function jump table (12) to the second function jump table (13).

4. The information processing device according to claim 3,
wherein the jump table information (14) includes a created date and time of the respective function jump table (12, 13), and
wherein the processing unit (10) determines a latest function jump table (12, 13) on the basis of the created date and time.

5. The information processing device according to claim 1,
wherein, when a predetermined defect occurs within a predetermined time after the jump table is updated to call the new function,
the processing unit (10) returns the jump table to a state before updating to call the function before change.

6. The information processing device according to claim 1,
wherein the storage unit (11) includes a large-capacity block which is a memory block of a predetermined capacity and a small-capacity block which is a memory block of a capacity smaller than the large-capacity block, and
wherein the program storage region (17) is defined in the large-capacity block, and
the jump table storage region (18) is defined in the small-capacity block.

7. The information processing device according to claim 1,
wherein the storage unit (11) includes a plurality of memory blocks, and
wherein, in a state where a using function and an unused function are mixed in the memory block, the processing unit (10) copies only the using function by setting the memory block to a copying source and a memory block different from the memory block to a copying destination, and sets the memory block of the copying source to an empty state.

8. The information processing device according to claim 1,
wherein the storage unit (11) includes a plurality of memory blocks, and
wherein, when the program is updated, the processing unit (10) copies a function which is not changed to a memory block which is different from the memory block where the function to be changed is stored, and writes the new function of the function to be changed to the memory block where the function which is not changed is copied.

9. The information processing device according to claim 1,
wherein the information processing device is a vehicle control device which is mounted in a vehicle and controls the vehicle, and
wherein the processing unit (10) updates the jump table when the information processing device is energized.

10. The information processing device according to claim 1,
wherein the information processing device is a vehicle control device which is mounted in a vehicle and controls the vehicle, and
wherein the processing unit (10) updates the jump table when an engine of the vehicle is stopped.

## Patentansprüche

1. Informationsverarbeitungsvorrichtung, die Folgendes umfasst:
eine Speichereinheit (11); und
eine Verarbeitungseinheit (10),
wobei auf der Speichereinheit (11) ein Programm gespeichert ist, das eine Funktion und eine Sprungtabelle umfasst, die ein Aufrufen der Funktion durch das Programm definiert, und
wobei die Verarbeitungseinheit (10) ausgelegt ist, um die aufzurufende Funktion in Bezug auf die Sprungtabelle zu bestimmen, wenn das Programm ausgeführt wird, und,
wenn das Programm, begleitet von einer Änderung der Funktion, aktualisiert wird, eine neue Funktion zu schreiben, die eine Funktion nach der Änderung ist, und die Sprungtabelle zu aktualisieren, um die neue Funktion aufzurufen,
wobei die Speichereinheit (11) Folgendes umfasst:
eine Programmspeicherregion (17), in der das Programm gespeichert ist, und
eine Sprungtabellenspeicherregion (18), in der die Sprungtabelle gespeichert ist, und
wobei die Verarbeitungseinheit (10) ausgelegt ist, um, wenn das Programm, begleitet von einer Änderung der Funktion, aktualisiert wird, die neue Funktion in die Programmspeicherregion (17) zu schreiben und die Sprungtabelle der Sprungtabellenspeicherregion (18) zu aktualisieren, um die neue Funktion aufzurufen,
wobei die Sprungtabelle eine Funktionssprungtabelle (12, 13) umfasst, die eine Adresse einer aufzurufenden Funktion festlegt,
wobei die Sprungtabelle Sprungtabelleninformationen (14) umfasst, die eine zu verwendende Funktionssprungtabelle (12, 13) angeben,
wobei die Verarbeitungseinheit (10) ausgelegt ist, um, wenn die Sprungtabelle aktualisiert wird, eine zweite Funktionssprungtabelle (13), die eine Adresse der neuen Funktion festlegt, in die Sprungtabellenspeicherregion (18) zu schreiben, während eine erste Funktionssprungtabelle (12), die eine Adresse der Funktion vor der Änderung festlegt, belassen wird, und die Sprungtabelleninformationen (14) zu aktualisieren, um die zu verwendende Funktionssprungtabelle (12, 13) von der ersten Funktionssprungtabelle (12) auf die zweite Funktionssprungtabelle (13) zu ändern.

2. Informationsverarbeitungsvorrichtung nach Anspruch 1,
wobei die Sprungtabelleninformationen (14) anzeigen, ob jede Funktionssprungtabelle (12, 13) korrekt geschrieben und gültig ist, und
wobei die Verarbeitungseinheit (10) die zu verwendende Funktionssprungtabelle (12, 13) aus den als gültig bestimmten Funktionssprungtabellen (12, 13) auswählt.

3. Informationsverarbeitungsvorrichtung nach Anspruch 1,
wobei die Sprungtabelleninformationen (14) Informationen sind, mit denen eine neueste Funktionssprungtabelle (12, 13) bestimmt werden kann, und
wobei die Verarbeitungseinheit (10) einen neuesten Zustand der ersten Funktionssprungtabelle (12) auf einen neuesten Zustand der zweiten Funktionssprungtabelle (13) aktualisiert, wenn die zu verwendende Funktionssprungtabelle (12, 13) von der ersten Funktionssprungtabelle (12) auf die zweite Funktionssprungtabelle (13) geändert wird.

4. Informationsverarbeitungsvorrichtung nach Anspruch 3,
wobei die Sprungtabelleninformationen (14) ein(e) erzeugte(s) Datum und Zeit der entsprechenden Funktionssprungtabelle (12, 13) umfassen, und
wobei die Verarbeitungseinheit (10) eine neueste Funktionssprungtabelle (12, 13) basierend auf dem/der erzeugten Datum und Zeit bestimmt.

5. Informationsverarbeitungsvorrichtung nach Anspruch 1,
wobei, wenn ein vorbestimmter Fehler innerhalb einer vorbestimmten Zeit nach dem Aktualisieren der Sprungtabelle zum Aufrufen der neuen Funktion auftritt,
die Verarbeitungseinheit (10) die Sprungtabelle auf einen Zustand vor dem Aktualisieren zum Aufrufen der Funktion vor der Änderung zurückstellt.

6. Informationsverarbeitungsvorrichtung nach Anspruch 1,
wobei die Speichereinheit (11) einen Block mit großer Kapazität, der ein Speicherblock mit einer vorbestimmten Kapazität ist, und einen Block mit geringer Kapazität, der ein Speicherblock mit einer kleineren Kapazität als der Block mit großer Kapazität ist, umfasst, und
wobei die Programmspeicherregion (17) in dem Block mit großer Kapazität definiert ist, und
wobei die Sprungtabellenspeicherregion (18) in dem Block mit geringer Kapazität definiert ist.

7. Informationsverarbeitungsvorrichtung nach Anspruch 1,
wobei die Speichereinheit (11) eine Vielzahl von Speicherblöcken umfasst, und
wobei die Verarbeitungseinheit (10) in einem Zustand, in dem eine verwendete Funktion und eine nicht verwendete Funktion in dem Speicherblock gemischt werden, nur die verwendete Funktion kopiert, indem sie den Speicherblock auf eine Kopierquelle einstellt, einen anderen Speicherblock als den Speicherblock auf ein Kopierziel einstellt und den Speicherblock der Kopierquelle auf einen Leerzustand einstellt.

8. Informationsverarbeitungsvorrichtung nach Anspruch 1,
wobei die Speichereinheit (11) eine Vielzahl von Speicherblöcken umfasst und
wobei die Verarbeitungseinheit (10), wenn das Programm aktualisiert wird, eine nicht geänderte Funktion in einen Speicherblock, der ein anderer ist als der Speicherblock, in dem die zu ändernde Funktion gespeichert ist, kopiert und die neue Funktion der zu ändernden Funktion in den Speicherblock schreibt, in den die nicht geänderte Funktion kopiert ist.

9. Informationsverarbeitungsvorrichtung nach Anspruch 1,
wobei die Informationsverarbeitungsvorrichtung eine Fahrzeugsteuervorrichtung ist, die in einem Fahrzeug angebracht ist und das Fahrzeug steuert, und
wobei die Verarbeitungseinheit (10) die Sprungtabelle aktualisiert, wenn die Informationsverarbeitungsvorrichtung mit Energie versorgt wird.

10. Informationsverarbeitungsvorrichtung nach Anspruch 1,
wobei die Informationsverarbeitungsvorrichtung eine Fahrzeugsteuervorrichtung ist, die in einem Fahrzeug angebracht ist und das Fahrzeug steuert, und
wobei die Verarbeitungseinheit (10) die Sprungtabelle aktualisiert, wenn ein Motor des Fahrzeugs abgeschaltet wird.

## Revendications

1. Dispositif de traitement d'informations, comprenant :
une unité de stockage (11) ; et
une unité de traitement (10) ;
dans lequel l'unité de stockage (11) stocke un programme qui contient une fonction et une table de saut qui définit l'appel de la fonction par le programme ; et
dans lequel l'unité de traitement (10) est configurée de manière à :
déterminer la fonction à appeler, en faisant référence à la table de saut, lorsque le programme est exécuté ; et
lorsque le programme est mis à jour à la suite d'une modification de la fonction :
écrire une nouvelle fonction qui correspond à une fonction postérieure à la modification et mettre à jour la table de saut pour appeler la nouvelle fonction ;
dans lequel l'unité de stockage (11) inclut :
une région de stockage de programme (17) qui stocke le programme ; et
une région de stockage de table de saut (18) qui stocke la table de saut ; et
dans lequel l'unité de traitement (10) est configurée de manière à :
lorsque le programme est mis à jour à la suite d'une modification de la fonction,
écrire la nouvelle fonction dans la région de stockage de programme (17) ; et
mettre à jour la table de saut de la région de stockage de table de saut (18) pour appeler la nouvelle fonction ;
dans lequel la table de saut inclut une table de saut de fonction (12, 13) qui désigne une adresse d'une fonction à appeler ;
dans lequel la table de saut inclut des informations de table de saut (14) qui indiquent une table de saut de fonction (12, 13) à utiliser ;
dans lequel l'unité de traitement (10) est configurée de manière à,
lorsque la table de saut est mise à jour :
écrire une seconde table de saut de fonction (13) désignant une adresse de la nouvelle fonction dans la région de stockage de table de saut (18), tout en laissant une première table de saut de fonction (12) désignant une adresse de la fonction avant la modification ; et
mettre à jour les informations de table de saut (14) pour modifier la table de saut de fonction (12, 13) à utiliser, de la première table de saut de fonction (12) à la seconde table de saut de fonction (13).

2. Dispositif de traitement d'informations selon la revendication 1,
dans lequel les informations de table de saut (14) indiquent si chaque table de saut de fonction (12, 13) est correctement écrite et valide ; et
dans lequel l'unité de traitement (10) sélectionne la table de saut de fonction (12, 13) à utiliser parmi les tables de saut de fonction (12, 13) qui sont déterminées comme étant valides.

3. Dispositif de traitement d'informations selon la revendication 1,
dans lequel les informations de table de saut (14) sont des informations au moyen desquelles une table de saut de fonction (12, 13) la plus récente peut être déterminée ; et
dans lequel l'unité de traitement (10) met à jour un état le plus récent de la première table de saut de fonction (12) vers un état le plus récent de la seconde table de saut de fonction (13), lorsque la table de saut de fonction (12, 13) à utiliser est modifiée de la première table de saut de fonction (12) à la seconde table de saut de fonction (13).

4. Dispositif de traitement d'informations selon la revendication 3,
dans lequel les informations de table de saut (14) incluent une date et une heure créées de la table de saut de fonction respective (12, 13) ; et
dans lequel l'unité de traitement (10) détermine une table de saut de fonction la plus récente (12, 13) sur la base de la date et de l'heure créées.

5. Dispositif de traitement d'informations selon la revendication 1,
dans lequel, lorsqu'un défaut prédéterminé se produit dans un temps prédéterminé après la mise à jour de la table de saut pour appeler la nouvelle fonction,
l'unité de traitement (10) ramène la table de saut à un état antérieur à la mise à jour pour appeler la fonction antérieure à la modification.

6. Dispositif de traitement d'informations selon la revendication 1,
dans lequel l'unité de stockage (11) inclut un bloc de grande capacité qui est un bloc de mémoire d'une capacité prédéterminée, et un bloc de petite capacité qui est un bloc de mémoire d'une capacité inférieure à celle du bloc de grande capacité ; et
dans lequel la région de stockage de programme (17) est définie dans le bloc de grande capacité ; et
la région de stockage de table de saut (18) est définie dans le bloc de petite capacité.

7. Dispositif de traitement d'informations selon la revendication 1,
dans lequel l'unité de stockage (11) comprend une pluralité de blocs de mémoire ; et
dans lequel, dans un état où une fonction d'utilisation et une fonction inutilisée sont mélangées dans le bloc de mémoire, l'unité de traitement (10) ne copie que la fonction d'utilisation en plaçant le bloc de mémoire dans une source de copie et un bloc de mémoire différent du bloc de mémoire dans une destination de copie, et place le bloc de mémoire de la source de copie dans un état vide.

8. Dispositif de traitement d'informations selon la revendication 1,
dans lequel l'unité de stockage (11) inclut une pluralité de blocs de mémoire ; et
dans lequel, lorsque le programme est mis à jour, l'unité de traitement (10) copie une fonction qui n'est pas modifiée, dans un bloc de mémoire qui est différent du bloc de mémoire où la fonction à modifier est stockée, et écrit la nouvelle fonction de la fonction à modifier dans le bloc de mémoire où la fonction qui n'est pas modifiée est copiée.

9. Dispositif de traitement d'informations selon la revendication 1,
dans lequel le dispositif de traitement d'informations est un dispositif de commande de véhicule qui est installé dans un véhicule et qui commande le véhicule ; et
dans lequel l'unité de traitement (10) met à jour la table de saut lorsque le dispositif de traitement d'informations est alimenté en énergie.

10. Dispositif de traitement d'informations selon la revendication 1,
dans lequel le dispositif de traitement d'informations est un dispositif de commande de véhicule qui est installé dans un véhicule et qui commande le véhicule ; et
dans lequel l'unité de traitement (10) met à jour la table de saut lorsqu'un moteur du véhicule est mis à l'arrêt.
